# EUROPÄISCHE PATENTANMELDUNG

(11) **EP 2 669 195 A1**
(43) Veröffentlichungstag der Anmeldung: **04.12.2013**
(21) Anmeldenummer: 13002766.7
(22) Anmeldetag: 28.05.2013
(51) Int. Cl.: B64C 27/22, B64C 29/00, B64C 39/02, B64C 27/30

(54) **Fluggerät**

(30) Priorität: 01.06.2012 DE 102012010937
(71) Anmelder: EMT Ingenieurgesellschaft Dipl.-Ing. Hartmut Euer mbH, 82377 Penzberg (DE)
(72) Erfinder: Euer, Hartmut, 82402 Seeshaupt (DE); Wernicke, Joachim, 14167 Berlin (DE); Keidel, Bernhard, 82377 Penzberg (DE)
(74) Vertreter: Zeitler - Volpert - Kandlbinder

(57) **Zusammenfassung**

Ein Fluggerät mit einem Rumpf (1), einer Tragfläche (2) und mindestens zwei Antriebsrotoren (5,7) ist **dadurch gekennzeichnet,** dass
- mindestens ein erster Antriebsrotor (7) zumindest temporär eine horizontale Schubrichtung aufweist,
- mindestens ein zweiter Antriebsrotor (5) an einem Schwenkarm (8) befestigt und mittels des Schwenkarms (8) von einer ersten Position in eine zweite Position verschwenkbar ist, wobei in der ersten Position ein Betrieb des Antriebsrotors mit zumindest vertikaler Schubrichtung erfolgt und in der zweiten Position der Antriebsrotor an dem Rumpf (1) und/oder der Tragfläche (2) anliegt oder in dem Rumpf (1) und/oder in der Tragfläche (2) aufgenommen ist, wobei in der zweiten Position kein Betrieb des Antriebsrotors erfolgt.

## Beschreibung

Die Erfindung betrifft ein Fluggerät und insbesondere ein Starrflügler-Fluggerät für den Flug mit Unterschallgeschwindigkeit, das verstellbare, elektrisch angetriebene Propeller-Schubrotoren aufweist und das sich sowohl im konventionellen aerodynamischen Flug (durch während der Vorwärtsbewegung von den Tragflächen erzeugen Auftrieb getragen: "Reiseflug") als auch im schubkraftgetragenen Flug (mit keiner oder nur geringer horizontaler Geschwindigkeit, jedoch im vertikalem Steigen, Schweben oder Sinken: "Schwebeflug") befinden kann.

Innerhalb der Kategorie der motorgetriebenen Starrflügler wird zwischen Motorflugzeugen und Motorseglern unterschieden, wobei die Unterscheidung gemäß der sogenannten Gleitzahl erfolgt. Die Gleitzahl ist der reziproke Gleitwinkel (im Bogenmaß) im antriebslosen Gleitflug. Eine hohe Gleitzahl ist ein Maß für die Luftwiderstandsarmut des Fluggeräts. Als Motorflugzeuge gelten Starrflügler mit Gleitzahlen kleiner als ca. 20 und als Motorsegler solche mit Gleitzahlen größer als ca. 20. Motorsegler sind infolge ihrer verlustarmen aerodynamischen Umströmung diejenige Flugzeugkonfiguration mit der sparsamsten Verwendung von Antriebsenergie, d.h. sie erlauben bei gegebenem Energievorrat die längsten Flugdauern von allen bekannten motorisch angetriebenen Fluggeräten.

Unbemannte Fluggeräte für die langandauernde luftgestützte Bodenbeobachtung sind deshalb in ihrer aerodynamischen Formgebung meist als Motorsegler realisiert. Gegenüber antriebslosen Segelfluggeräten sind ihre Gleitzahlen jedoch infolge der Luftwiderstandsbeiträge der Antriebspropeller, bordseitiger Funkantennen und möglicherweise in die Luftumströmung hineinragender Beobachtungskameras geringer.

Um den Aufwand von Start- und Landebahnen oder von Start- und Lande-Hilfsgeräten (wie Wurfkatapulte, Starthilfsraketen, Fallschirme und bodenseitige Landenetze oder -seile) zu vermeiden, besteht die Tendenz zum vertikalen Start und zur vertikalen Landung von Fluggeräten (international als "VTOL" - Vertical Take-Off and Landing - bezeichnet).

VTOL wird bei unbemannten Fluggeräten für die luftgestützte Bodenbeobachtung üblicherweise mittels Schubpropellern mit vertikaler Schubrichtung realisiert, entweder in der Konfiguration eines konventionellen Hubschraubers mit einem Hauptrotor und einem Heckrotor oder in der sogenannten Multirotor-Konfiguration, d.h. mit mehreren, gegebenenfalls auch koaxialen Rotoren. Der Nachteil von Fluggeräten mit Rotoren mit vertikaler Schubrichtung ist der hohe Antriebsleistungsbedarf, der darin begründet ist, dass sämtliche Auftriebsleistung von der Rotoren aufgebracht werden muss, d.h. der aerodynamische Auftrieb von Tragflächen in der Vorwärtsbewegung wird nicht genutzt.

Um die energetischen Vorteile eines Starrflüglers (mit horizontaler Antriebsschubrichtung) mit den einsatzpraktischen Vorteilen des Drehflüglers (mit vertikaler Antriebsschubrichtung) zu verbinden, existieren seit fast einem Jahrhundert Ansätze, Kombinationen aus beiden Bauformen zu entwickeln, indem bei einem als Starrflügler konzipierten Fluggerät die Antriebsrotoren bei Start und Landung temporär in vertikale Schubrichtung geschwenkt werden. Solange nur Verbrennungsmotoren (Kolbenmotoren oder Gasturbinen) zur Verfügung standen, erwiesen sich diverse Realisierungen solcher Konzepte in den 1960er und 1970er Jahren als technisch so komplex, dass sie über das Prototypenstadium nicht hinauskamen.

Seit den 1990er Jahren ermöglichen technische Fortschritte bei Elektromotoren, insbesondere die Steigerung der Leistungsdichte (vorrangig ermöglicht durch neue Permanentmagnetmaterialien), Fluggeräte mit elektrischen Propellerantrieben auszurüsten. Die Vorteile sind der verminderte Fluglärm, die schnellere und präzisere Reaktion der Propeller auf Drehzahlbefehle und das geringere Gewicht der Elektromotoren gegenüber Verbrennungsmotoren gleicher Leistung (wenngleich die Stromversorgung über Batterien, Brennstoffzellen oder Bordstromaggregate bisher insgesamt noch keinen Gewichtsvorteil erbringt).

Für lokale Luftbeobachtunganwendungen ist ein Markt vertikal startender und landender unbemannter Kleinfluggeräte entstanden. Diese sind teils in der Bauart konventioneller Hubschrauber realisiert, d.h. mit achsenfestem, aber blattverstellbarem Hauptrotor oder mit nicht verstellbarem Koaxial-Doppelrotor und Steuer-Hilfsrotoren. Zunehmend werden solche Fluggeräte aber auch als Multirotor-Konfigurationen realisiert, indem mindestens drei unabhängige Elektromotor-Propeller-Kombinationen ("Rotoren") mit vertikalen Drehachsen, ungefähr eine horizontale Ebene aufspannend, zellenfest montiert sind. Bei dieser Konfiguration kann allein durch eine individuelle Variation der Rotordrehzahlen die Fluglage und somit die Schubkraftrichtung geändert und dadurch das Fluggerät entlang räumlicher Flugbahnen gesteuert oder ortsfest in der Schwebe gehalten werden. Die am häufigsten anzutreffende Ausgestaltung dieser Art umfasst vier Rotoren in einer etwa quadratischen Anordnung. Diese Fluggeräte werden als Quadrokopter bezeichnet.

Der Hauptvorteil einer Multirotor-Konfiguration ist die mechanische Einfachheit, da die komplexen Blattverstellungsrotorköpfe oder Koaxialrotorwellenführungen von Hubschraubern entfallen und stattdessen lediglich die elektrischen Stromstärken der die Propeller antreibenden Elektromotoren verändert werden. Multirotor-Fluggeräte verfügen üblicherweise nicht über Tragflächen, da diese die Luftströmung der Propeller behindern würden. Somit sind solche Multirotor-Konfigurationen in einer effizienten Nutzung der Antriebsenergie den Starrflüglern und insbesondere den Motorseglern weit unterlegen. Dieser Nachteil wird jedoch angesichts der konstruktiven und - für die meist nur lokalen Anwendungen - einsatzpraktischen Vorteile hingenommen.

Um bei Multirotor-Konfigurationen für längere Flugdauern die Vorteile des aerodynamischen Fluges nutzbar zu machen, lag es nahe, aus den 1960er/1970er Jahren bekannte Konfigurationen von Schwenkpropeller-Flugzeugen nachzuvollziehen, und zwar mit Elektroantrieb statt Verbrennungsantrieb der Propeller. Solche elektrisch angetriebenen Schwenkpropeller-Flugzeuge für unbemannte Beobachtungsaufgaben sind als in Entwicklung befindlich berichtet, insbesondere das Fluggerät IAI Panther (Israel), das 2010 als Prototyp vorgestellt wurde, sowie das Fluggerät Mavionics Avigle, das seit 2011 unter Leitung der TU Dortmund (Deutschland) entwickelt wird.

Im Fall des IAI Panther wurde eine konventionelle Motorsegler-Konfiguration als sogenanntes Kipprotor-Fluggerät mit drei Rotoren versehen, davon zwei vor den Tragflächen zwischen vertikaler und horizontaler Schubrichtung kippbar und eine hinter den Tragflächen mit fester vertikaler Schubrichtung; die Motoren wurden an Längsarmen (d.h. parallel zur Längsachse des Fluggerätes verlaufenden Armen) an den Tragflächen sowie am Rumpf befestigt.

Das Fluggerät Avigle ist in klassischer Weise zweimotorig ausgelegt, mit einem fest montierten Zugpropeller in jeder Tragfläche, und die Tragflächen selbst sind zwischen horizontaler und vertikaler Schubrichtung schwenkbar (sogenanntes Kippflügel-Fluggerät).

In den genannten Beispielen sind die Tragflächen an der Befestigung der Antriebsrotoren oder sogar der Kippung der Schubrichtung zwischen horizontal und vertikal aktiv beteiligt, was zu einer - gegenüber der reinen Auftriebstragfunktion - erhöhten mechanischen Komplexität der Tragflächen und ihrer Befestigung an dem Rumpf des Fluggeräts und folglich auch zu erhöhten Gewichten führt.

Ungeachtet der Art der Befestigung der schwenk- oder kippbaren Rotoren am Fluggerät besteht bei solchen elektrisch angetriebenen, vertikal start- und landefähigen Kombinationsfluggeräten folgendes Problem: Der Antriebsleistungsbedarf im Schwebeflug (mit vertikaler Schubrichtung) beträgt ein Mehrfaches (typischerweise mindestens ein Zehnfaches) des Antriebsleistungsbedarfes im aerodynamischen Reiseflug (mit horizontaler Schubrichtung). Die schwenkbaren oder festen Rotoren am Fluggerät müssen auf den hohen Antriebsleistungsbedarf des Schwebefluges ausgelegt sein und sind somit für den Reiseflug zwangsläufig überdimensioniert. Ferner bilden die für den Schwebeflug benötigten Antriebselemente (Elektromotoren, Propeller und Haltearme) im Reiseflug einen unerwünschten Luftwiderstand. Dieser kann zwar durch Stillstand und Neutralstellung (sogenannte Segelstellung) nicht benötigter Propeller oder durch Zusammenfalten solcher Propeller (sogenannte Klapppropeller) vermindert werden, das grundsätzliche Problem der Präsenz von lediglich für den Schwebeflug benötigten Antriebselementen in der Luftumströmung während des Reiseflugs und der darin begründeten Absenkung der Gleitzahl bleibt jedoch bestehen.

Der Erfindung lag die Aufgabe zugrunde, ein hinsichtlich der beschriebenen Nachteile des Stands der Technik verbessertes Fluggerät anzugeben. Insbesondere sollte ein elektrisch angetriebenes, senkrechtstart- und landefähiges Starrflügler-Fluggerät angegeben werden, das sich durch einen geringen Luftwiderstand im Reiseflug auszeichnet.

Diese Aufgabe wird durch den Gegenstand des unabhängigen Patentanspruchs 1 gelöst. Vorteilhafte Ausgestaltungen des erfindungsgemäßen Fluggeräts sind Gegenstand der abhängigen Patentansprüche und ergeben sich aus der nachfolgenden Beschreibung der Erfindung.

Der Erfindung lag der Gedanke zugrunde, den Luftwiderstand im Reiseflug eines gattungsgemäßen Fluggeräts, das mindestens einen Rumpf, mindestens eine Tragfläche und mindestens zwei (vorzugsweise mindestens drei) Antriebsrotoren aufweist, dadurch zu verringern, dass zumindest einige, vorzugsweise alle Antriebsrotoren, die lediglich für den Schwebeflug und demnach insbesondere für vertikale Start und Landungen benötigt werden, im Reiseflug zu deaktivieren und derart anzuordnen, dass diese den Luftwiderstand möglichst geringfügig negativ beeinflussen.

Ein gattungsgemäßes Fluggerät ist demnach erfindungsgemäß dadurch gekennzeichnet, dass
- mindestens ein Antriebsrotor zumindest temporär eine horizontale Schubrichtung aufweist,
- mindestens ein Antriebsrotor an einem Schwenkarm befestigt und mittels des Schwenkarms von einer ersten Position in eine zweite Position verschwenkbar ist, wobei in der ersten Position ein Betrieb des Antriebsrotors mit zumindest vertikaler Schubrichtung erfolgt und in der zweiten Position der Antriebsrotor an dem Rumpf und/oder der Tragfläche anliegt oder in dem Rumpf und/oder in der Tragfläche aufgenommen ist, wobei in der zweiten Position kein Betrieb des Antriebsrotors erfolgt.

Durch die erfindungsgemäße Ausbildung des Fluggerätes wird erreicht, dass im Reiseflug ein Teil der oder sämtliche nur für den Schwebeflug benötigten Antriebsrotoren aus der Luftumströmung des Fluggerätes entfernt sind und somit keinen unerwünschten Luftwiderstand erzeugen. Hinzu kommt, dass durch den Betrieb von lediglich einem Teil der Antriebsrotoren im Reiseflug eine Überdimensionierung der Antriebsleistung im Reiseflug gegenüber dem Schwebeflug vermindert oder sogar vermieden ist. Dabei ist vorzugsweise vorgesehen, dass der oder die den Antriebsleistungsbedarf für den Reiseflug sicherstellenden Antriebsrotoren in aerodynamisch vorteilhafter Anordnung, nämlich am Bug und/oder am Heck des Fluggerätes, vorgesehen sind.

Als "vertikale Schubrichtung" wird erfindungsgemäß eine Schubrichtung verstanden, die im Wesentlichen parallel oder koaxial zur Hochachse des Fluggeräts verläuft. Als "horizontale Schubrichtung" wird erfindungsgemäß eine Schubrichtung verstanden, die im Wesentlichen parallel oder koaxial zur Längsachse des Fluggeräts verläuft.

Unter einem "Anliegen des Antriebsrotors an dem Rumpf und/oder der Tragfläche" wird erfindungsgemäß verstanden, dass sich zumindest ein Abschnitt des Antriebsrotors in (möglichst) geringer Entfernung von der Hülle des Rumpfs und/oder des Tragflügels entfernt befindet oder der Antriebsrotor zumindest teilweise innerhalb eines Ausschnitts der Hülle des Rumpfs und/oder des Tragflügels angeordnet ist.

Als "in dem Rumpf und/oder in der Tragfläche aufgenommen" wird erfindungsgemäß verstanden, dass der Antriebsrotor (weitgehend) vollständig innerhalb des von der Hülle des Rumpfs und/oder des Tragflügels ausgebildeten Innenvolumens angeordnet ist.

In einer bevorzugten Ausführungsform des erfindungsgemäßen Fluggeräts kann vorgesehen sein, dass die Antriebsrotoren Propeller aufweisen, die weiterhin bevorzugt von elektrischen Antriebsmotoren angetrieben werden. Dabei können die Propeller infolge ihrer Anordnung an dem Fluggerät als Zugpropeller oder als Schubpropeller ausgeführt sein. Zudem können diese freilaufend oder auch als ummantelte Propeller (sogenannte "Impeller") ausgebildet sein.

Um die gewünschte Reduzierung des Luftwiderstands des erfindungsgemäßen Fluggeräts zu erreichen, kann vorzugsweise vorgesehen sein, dass der Schwenkarm und/oder der Propeller bzw. die oder zumindest einer der Propellerflügel des (jedes) zweiten Antriebsrotors in der zweiten Position im Wesentlichen in Längsrichtung des Fluggeräts weist.

Gemäß einer vorteilhaften Ausbildung der Erfindung sind die Antriebsrotoren nicht an den Tragflächen befestigt, wodurch die Tragflächen ausschließlich eine aerodynamische Tragfunktionen aufweisen und dadurch schwächer und folglich mit einem geringeren Gewicht ausgelegt werden können.

Gemäß einer weiteren vorteilhaften Ausbildung der Erfindung kann vorgesehen sein, dass die Anzahl der Antriebsrotoren geradzahlig ist und insbesondere vier oder sechs beträgt. Dabei können die mehreren Antriebsrotoren besonders bevorzugt symmetrisch beidseitig der Längsachse des Fluggeräts angeordnet sein. Dadurch kann zum einen die Möglichkeit realisiert werden, im Schwebeflug bei Ausfall eines Antriebsrotors dessen Schubkraft durch Schuberhöhung der intakt verbliebenen Antriebsrotoren ersetzen zu können (Antriebsredundanz) und während des Reisefluges können die vorzugsweise in einer relativ großen Entfernung vom Rumpf angeordneten Antriebsrotoren durch deren Schubvariation (Schubvektorsteuerung) eine Kurvenmanövrierfähigkeit (zusätzlich zu gegebenenfalls vorhandenen konventionellen aerodynamischen Stellgliedern wie Querruder, Seitenruder und Höhenruder) erzeugen.

Während der (jeder) erste Antriebsrotor (u.a.) der Erzeugung einer Antriebsleistung für den Reiseflug dient, ist der (jeder) zweite Antriebsrotor primär für die Bereitstellung der Antriebsleistung im Schwebeflug vorgesehen. In einer vorteilhaften Ausführungsform des erfindungsgemäßen Fluggeräts kann weiterhin vorgesehen sein, dass der (jeder) erste Antriebsrotor auch im Schwebeflug genutzt wird. Hierzu kann dann vorgesehen sein, dass der (vorzugsweise jeder) erste Antriebsrotor zwischen horizontaler und vertikaler Schubrichtung verschwenkbar ist.

Dabei kann besonders bevorzugt vorgesehen sein, dass der erste Antriebsrotor an einem Dreharm befestigt und mittels des Dreharms von einer ersten Position in eine zweite Position verschwenkbar ist, wobei in der ersten Position ein Betrieb des Antriebsrotors mit vertikaler Schubrichtung erfolgt und in der zweiten Position ein Betrieb des Antriebsrotors mit horizontaler Schubrichtung erfolgt

Gemäß einer weiteren vorteilhaften Ausbildung des erfindungsgemäßen Fluggeräts kann ein Paar von (ersten und/oder zweiten) Antriebsrotoren über einen gemeinsamen Schwenkarm verbunden sein, wobei der Schwenkarm um eine durch den Rumpf verlaufende, insbesondere zur Hochachse des Fluggeräts parallele oder koaxiale Achse drehbar ist.

In einer besonders bevorzugten Ausführungsform des Fluggeräts kann dann vorgesehen sein, dass das oder zumindest ein Paar einen ersten und einen zweiten Antriebsrotor umfasst. In der zweiten Position des ersten Antriebsrotors liegt der andere, zweite Antriebsrotor dann an dem Rumpf und/oder der Tragfläche an oder ist in dem Rumpf und/oder der Tragfläche aufgenommen.

Eine weiterhin bevorzugte Ausführungsform der Erfindung umfasst mindestens zwei Paare mit jeweils zwei, über einen gemeinsamen Schwenkarm verbundenen Antriebsrotoren, die in Längsrichtung des Fluggeräts hintereinander liegend angeordnet sind. Dabei kann besonders bevorzugt vorgesehen sein, dass zumindest ein Paar einen ersten und einen zweiten Antriebsrotor kombiniert. Diese Ausgestaltung ermöglicht zum Beispiel, im Schwebeflug die Trägerarme aus den Rumpfseiten herausragen zu lassen, so dass alle Antriebsrotoren vom Rumpf abgespreizt sind. Im Reiseflug können die Trägerarme dann mit vorzugsweise längsgestellten Propellern der Antriebsrotoren an dem Rumpf anliegen oder von diesem aufgenommen sein, wobei entweder ein (erster) Antriebsrotor des vorderen Schwenkarms an den Bug des Fluggeräts geschwenkt (und zusätzlich in horizontale Schubrichtung verschwenkt) oder ein (erster) Antriebsrotor des hinteren Trägerarmes an das Heck des Fluggeräts geschwenkt (und zusätzlich in horizontale Schubrichtung verschwenkt) ist.

Im Hinblick auf eine aerodynamisch vorteilhafte schlanke, tropfenähnliche Gestaltung des Rumpfs, die bei dem erfindungsgemäßen Fluggerät vorzugsweise vorgesehen ist, kann dann vorzugsweise auch vorgesehen sein, dass der gemeinsame Schwenkarm derart ausgebildet ist, dass in der zweiten Position des ersten Antriebsrotors dessen Rotationsachse parallel und insbesondere koaxial zur Längsachse des Fluggeräts ist und der andere Antriebsrotor des Paars an dem Rumpf und/oder der Tragfläche anliegt. Dies kann beispielsweise dadurch realisiert werden, dass der gemeinsame Schwenkarm einen abgewinkelten (z.B. um ca. 5° bis 20°) oder gekrümmten Verlauf (vorzugsweise in der horizontalen Ebene) aufweist.

Gemäß einer weiteren vorteilhaften Ausbildung des erfindungsgemäßen Fluggeräts sind insbesondere im Hinblick auf die Unterbringung der Antriebspropeller im Rumpf die Propeller des (jedes) zweiten Antriebsrotors als Festpropeller und insbesondere als Zweiblatt-Festpropeller ausgeführt, während - weiterhin bevorzugt - die Propeller des (jedes) ersten Antriebsrotors als Verstellpropeller (d.h. mit einstellbarem Anstellwinkel der Propellerblätter) und insbesondere als Zwei- oder Mehrblatt-Verstellpropeller ausgeführt sein können. Dabei besteht auch die Möglichkeit, die Propeller des (jedes) ersten Antriebsrotors mit einem anderen Durchmesser als die Propeller des (jedes) zweiten Antriebsrotors auszuführen.

Auf diese Weise wird ermöglicht, dass die Propeller des (jedes) zweiten Antriebsrotors als feste Zweiblattpropeller bei minimalem Gewicht für maximalen Standschub (Schwebeflugsituation) optimiert sind, während die (auch) für den Reiseflug genutzten Propeller des (jedes) ersten Antriebsrotors als Mehrblatt-Verstellpropeller bei gegebenenfalls kleinerem Propellerdurchmesser für die höheren Fluggeschwindigkeiten des Reisefluges hinsichtlich des Propellerwirkungsgrades optimiert werden können.

Neben Ausführungsformen, bei denen zumindest ein Antriebsrotor sowohl für den Reiseflug als auch für den Schwebeflug genutzt wird, kann auch vorgesehen sein, dass für den Reiseflug ein (erster) Antriebsrotor mit horizontaler Schubrichtung fest, d.h. nicht positionsveränderbar und insbesondere nicht verschwenkbar am Bug oder Heck des Fluggeräts montiert ist. Auf diese Weise kann die Ausführung der zweiten Antriebsrotoren (insbesondere ihrer Propeller, Antriebsmotoren und Aufhängungen) sowie die Verfahren der Transitionen zwischen Schwebeflug und Reiseflug vereinfacht werden, allerdings mit dem Nachteil des zusätzlichen Gewichts des ersten, ausschließlich für den Reiseflug und nicht für den Schwebeflug genutzten Antriebsrotors.

Gemäß einer weiteren vorteilhaften Ausgestaltung des erfindungsgemäßen Fluggeräts kann vorgesehen sein, dass die zwei Antriebsrotoren von zumindest einem Antriebsrotorenpaar um die Längsachse (die Verbindungsachse) des gemeinsamen Schwenkarms verschwenkbar sind, wobei dies besonders bevorzugt durch ein Verdrehen des mit den Antriebsrotoren drehfest verbundenen Schwenkarms selbst erfolgen kann. Dabei verläuft die Längsachse des gemeinsamen Schwenkarms vorzugsweise parallel oder koaxial zur Querachse des Fluggeräts. Auf diese Weise kann auch im Schwebeflug mittels der zweiten Antriebsrotoren eine horizontale Schubkomponente erzeugt werden, die es dem Fluggerät ermöglicht, eine mögliche horizontale Abdrift bei starkem Wind zu kompensieren. Ferner wird auf diese Weise ermöglicht, dass auch in der Schwebeflugkonfiguration durch eine horizontale Schubkomponente das Fluggerät horizontal beschleunigt wird, beispielsweise bis in einen Geschwindigkeitsbereich, in dem die aerodynamische Auftriebskraft der Tragfläche die vorherrschende vertikale Tragkraft wird, so dass in flugbahnmechanisch stetiger Weise die Transition vom schubgetragenen Schwebeflug in den von der Tragfläche getragenen Reiseflug durchgeführt werden kann.

Gemäß einer weiteren vorteilhaften Ausbildung des erfindungsgemäßen Fluggeräts ist/sind - alternativ oder zusätzlich zu der zuvor beschriebenen gemeinsamen Querachsenneigung der zwei Antriebsrotoren des mindestens einen Antriebsrotorenpaars - die Tragfläche(n) um eine quer zur Längsachse des Fluggeräts und insbesondere parallel oder koaxial zur Querachse des Fluggerätes angeordnete Achse verschwenkbar. Auch auf diese Weise kann die windbedingte Abdrift bei starkem Wind kompensiert werden, indem das Fluggerät gegen den Wind geneigt und so eine horizontale Schubkomponente gegen die Windrichtung erzeugt wird. Sofern die Längsachse des Fluggerätes in Windrichtung weist, wird durch die Neigung der Tragfläche(n) um die parallel oder koaxial zu Querachse liegende Achse eine windkrafterhöhende Anströmung der Tragflächen von oben vermieden.

Auch kann auf diese Weise eine horizontale Beschleunigung des Fluggerätes in einen Geschwindigkeitsbereich bewirkt werden, der den tragflächengetragenen Flug erlaubt. Dabei kann bereits ein Verschwenken der Tragfläche(n) um einen kleinen Winkel (z.B. maximal ca. +/- 30°) ausreichen.

Gemäß einer weiteren vorteilhaften Ausbildung der Erfindung kann vorgesehen sein, dass der zweite Antriebsrotor in seiner ersten Position um eine im Wesentlichen horizontale, in Richtung der Hochachse des Fluggeräts gerichtete und vorzugsweise diese (annähernd) kreuzende Achse schwenkbar ausgebildet ist (vorzugsweise um einen relativ kleinen Winkel von maximal ca. +/- 30°). Auf diese Weise wird ermöglicht, ein veränderliches Drehmoment um die Hochachse des Fluggerätes zu erzeugen und damit eine Lagesteuerung um die Hochachse vorzunehmen.

Eine Energieversorgung der vorzugsweise elektrisch angetriebenen Antriebsrotoren kann beispielsweise mittels Batterien, Brennstoffzellen oder eines z.B. von einem Verbrennungsmotor angetriebenen Generators erfolgen.

Zudem besteht die Möglichkeit, die Antriebsrotoren auch in Nutzbremsfunktion (Energierückgewinnung) einzusetzen.

Die erfindungsgemäßen Vorteile können umso deutlicher zutage treten, je höher die Gleitzahl des Fluggerätes ist.

Das erfindungsgemäße Fluggerät kann ein Fahrwerk, Landebeine oder Landekufen besitzen. Zudem können diese Komponenten fest montiert oder einziehbar ausgeführt sein.

Weiterhin kann das erfindungsgemäße Fluggerät als Hoch-, Mittel-, Tief- oder Mehrfachdecker ausgeführt sein.

Die Antriebsrotoren können in Höhe des oberen, mittleren oder unteren Rumpfbereichs angeordnet sein.

Das erfindungsgemäße Fluggerät kann in konventioneller Konfiguration mit einem Rumpf, zwei Tragflächen und einem heckseitigen Leitwerk ausgeführt sein. Ebenso ist eine andere Konfiguration möglich, beispielsweise eine Ausgestaltung als Doppel- oder Mehrdecker, mit Doppelrumpf, Doppelleitwerk, T- oder V-Leitwerk, als Entenflugzeug oder Tandemflügler.

Eine vorteilhafte Anwendung des erfindungsgemäßen Fluggeräts liegt im Bereich unbemannter Fluggeräte für die luftgestützte Bodenbeobachtung.

Die Erfindung wird nachfolgend anhand von in den Zeichnungen dargestellten Ausführungsbeispielen näher erläutert. In den Zeichnungen zeigt:
- Fig. 1:: eine erste Ausführungsform eines erfindungsgemäßen Fluggeräts in der Konfiguration für den Schwebeflug;
- Fig. 2:: das Fluggerät der Fig. 1 in der Konfiguration für den Reiseflug;
- Fig. 3:: eine zweite Ausführungsform eines erfindungsgemäßen Fluggeräts in der Konfiguration für den Schwebeflug;
- Fig. 4:: das Fluggerät der Fig. 3 in der Konfiguration für den Reiseflug;
- Fig. 5:: eine dritte Ausführungsform eines erfindungsgemäßen Fluggeräts in der Konfiguration für den Schwebeflug;
- Fig. 6:: das Fluggerät der Fig. 5 in der Konfiguration für den Reiseflug;
- Fig. 7:: eine vierte Ausführungsform eines erfindungsgemäßen Fluggeräts in der Konfiguration für den Schwebeflug;
- Fig. 8:: das Fluggerät der Fig. 7 in der Konfiguration für den Reiseflug;
- Fig. 9:: eine fünfte Ausführungsform eines erfindungsgemäßen Fluggeräts in der Konfiguration für den Schwebeflug;
- Fig. 10:: das Fluggerät der Fig. 9 in der Konfiguration für den Reiseflug;
- Fig. 11:: eine sechste Ausführungsform eines erfindungsgemäßen Fluggeräts in der Konfiguration für den Schwebeflug;
- Fig. 12:: das Fluggerät der Fig. 11 in der Konfiguration für den Reiseflug;
- Fig. 13:: eine siebte Ausführungsform eines erfindungsgemäßen Fluggeräts in der Konfiguration für den Schwebeflug;
- Fig. 14:: das Fluggerät der Fig. 13 in der Konfiguration für den Reiseflug;
- Fig. 15:: eine achte Ausführungsform eines erfindungsgemäßen Fluggeräts in der Konfiguration für den Schwebeflug;
- Fig. 16:: das Fluggerät der Fig. 15 in der Konfiguration für den Reiseflug;
- Fig. 17:: eine neunte Ausführungsform eines erfindungsgemäßen Fluggeräts in der Konfiguration für den Schwebeflug;
- Fig. 18:: das Fluggerät der Fig. 17 in der Konfiguration für den Reiseflug;

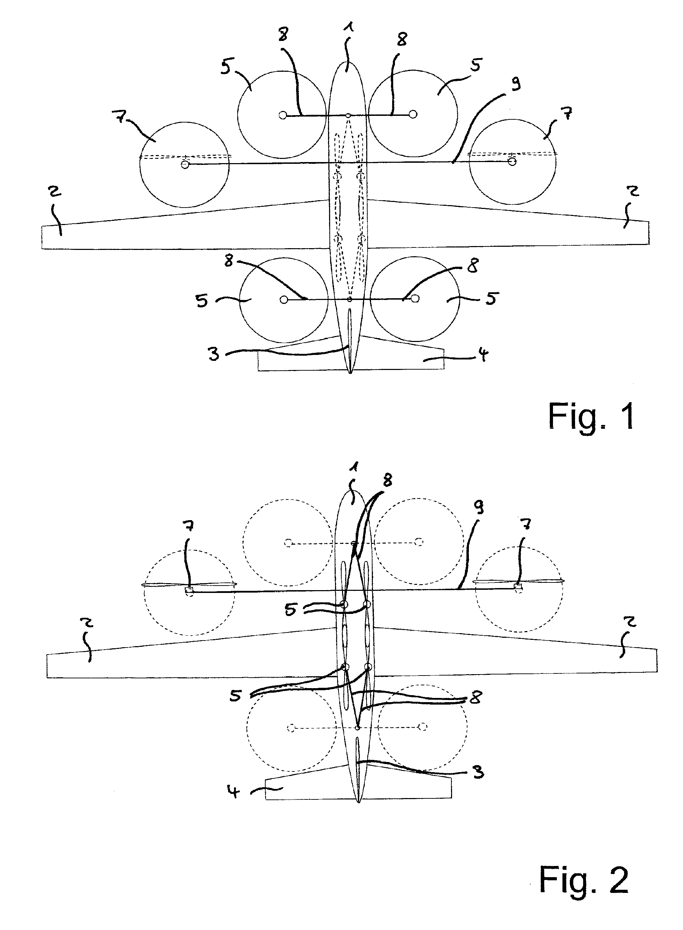

Die Fig. 1 bis 18 zeigen in schematischer Darstellung insgesamt neun Ausführungsformen erfindungsgemäßer Fluggeräte, wobei für jedes der Fluggeräte einmal die Konfiguration, d.h. die Anordnung und Ausrichtung der Antriebsrotoren, für den Schwebeflug und einmal für den Reiseflug dargestellt ist. Dabei ist zusätzlich in jeder der Zeichnungen die jeweils nicht aktive Konfiguration zusätzlich anhand von gestrichelten Linien dargestellt.

In allen neun Ausführungsformen ist das Fluggerät in konventioneller Motorseglerkonfiguration ausgeführt, d.h. dieses weist einen Rumpf 1, zwei seitlich an dem Rumpf befestigte Tragflächen 2 und ein heckseitiges Seiten- 3 und Höhenleitwerk 4 auf. Die Fluggeräte weisen weiterhin noch eine Mehrzahl an Antriebsrotoren auf, die mittels jeweils eines Elektromotors angetriebene Propeller umfassen. In den dargestellten erfindungsgemäßen Fluggeräten sind drei verschiedene Arten von Antriebsrotoren vorgesehen:
- Zum einen gibt es Antriebsrotoren, die lediglich mit vertikaler Schubrichtung betrieben werden können und deshalb nur im Schwebeflug des jeweiligen Fluggeräts aktiv sind. Diese Antriebsrotoren werden im Folgenden als Schwebeflug-Antriebsrotoren 5 bezeichnet.
- Weiterhin sind Antriebsrotoren vorgesehen, die lediglich mit horizontaler Schubrichtung betrieben werden können und deshalb nur im Reiseflug des jeweiligen Fluggeräts (temporär) aktiv sind. Diese Antriebsrotoren werden im Folgenden als Reiseflug-Antriebsrotoren 6 bezeichnet.
- Die dritte Art der Antriebsrotoren sind die im Folgenden als Kombination-Antriebsrotoren 7 bezeichneten. Diese können sowohl eine vertikale als auch eine horizontale Schubrichtung aufweisen, so dass sie im Schwebeflug als auch im Reiseflug aktiv sein können.

Die Antriebsrotoren sind über Tragarme am Rumpf 1 befestigt, wobei die Tragarme teilweise um parallel zur Hochsachse des Fluggeräts verlaufende Achsen verschwenkbar ausgebildet sind. Diese verschwenkbaren Tragarme werden im Folgenden als Schwenkarme 8 bezeichnet. Weiterhin sind in einigen der Fluggeräte Tragarme vorgesehen, die um ihre eigene Längsachse verdreht werden können. Diese Tragarme werden im Folgenden als Dreharme 9 bezeichnet.

In den Fig. 1 und 2 ist eine Ausführungsform eines erfindungsgemäßen Fluggeräts dargestellt, das insgesamt sechs Antriebsrotoren aufweist. Davon sind vier als Schwebeflug-Antriebsrotoren 5 ausgebildet und somit ausschließlich während des Schwebeflugs in Betrieb. Die zwei übrigen Antriebsrotoren sind als Kombinations-Antriebsrotoren 7 ausgebildet, die sowohl im Schwebe- als auch im Reiseflug im Betrieb sind bzw. sein können. Jeder der Schwebeflug-Antriebsrotoren ist an einem eigenen Schwenkarm 8 befestigt. Die beiden Kombinations-Antriebsrotoren sind an einem gemeinsamen Dreharm 9 befestigt und können durch eine Drehung des Dreharms 9 um seine eigene Längsachse, die hier auch parallel oder koaxial zu der Querachse des Fluggeräts ist, um ca. 90° verschwenkt werden. Dadurch können die Kombinations-Antriebsrotoren 7 für den Schwebeflug eine vertikale Schubrichtung und für den Reiseflug eine horizontale Schubrichtung aufweisen. Alternativ besteht auch die Möglichkeit, den gemeinsamen Tragarm fest stehendend auszubilden und die Kombinations-Antriebsrotoren 7 drehbar an diesem anzubinden.

Im Schwebeflug (vgl. Fig. 1) sind sowohl die Schwebeflug-Antriebsrotoren 5 als auch die Kombinations-Antriebsrotoren 7 im Betrieb. Alle sechs Antriebsrotoren sind dabei (in achsensymmetrischer Anordnung) seitlich des Rumpfs 1 positioniert und weisen eine vertikale Schubrichtung auf.

Im Reiseflug (vgl. Fig. 2) sind nur die zwei Kombinations-Antriebsrotoren 7 im Betrieb, die hierzu - wie beschrieben - durch eine Drehung des gemeinsamen Dreharms 9 um ca. 90° in die horizontale Schubrichtung verschwenkt wurden. Die Schwebeflug-Antriebsrotoren 5 sind dann durch ein Verschwenken der dazugehörigen Schwenkarme 8 in den Rumpf 1 des Fluggeräts eingezogen, wobei die vorderen (in der Nähe des Bugs des Fluggeräts) Schwebeflug-Antriebsrotoren 5 nach hinten und die hinteren (in der Nähe des Hecks des Fluggeräts) Schwebeflug-Antriebsrotoren 5 nach vorne verschwenkt wurden. Durch das Einziehen der Schwebeflug-Antriebsrotoren 5 in den Rumpf 1 befinden sich diese nicht mehr in der Luftströmung. Diese erhöhen somit den Luftwiderstand des Fluggeräts im Reiseflug nicht (wesentlich). Im Reiseflug befinden sich somit nur die beiden Kombinations-Antriebsrotoren 7 und der gemeinsame Dreharm 9 in der Luftströmung.

Der Übergang (die sogenannte "Transition") zwischen Schwebeflug und Reiseflug erfolgt kontinuierlich, indem der Dreharm 9 mit relativ konstanter Drehgeschwindigkeit zwischen vertikaler und horizontaler Schubrichtung der Kombinations-Antriebsrotoren 7 gedreht wird.

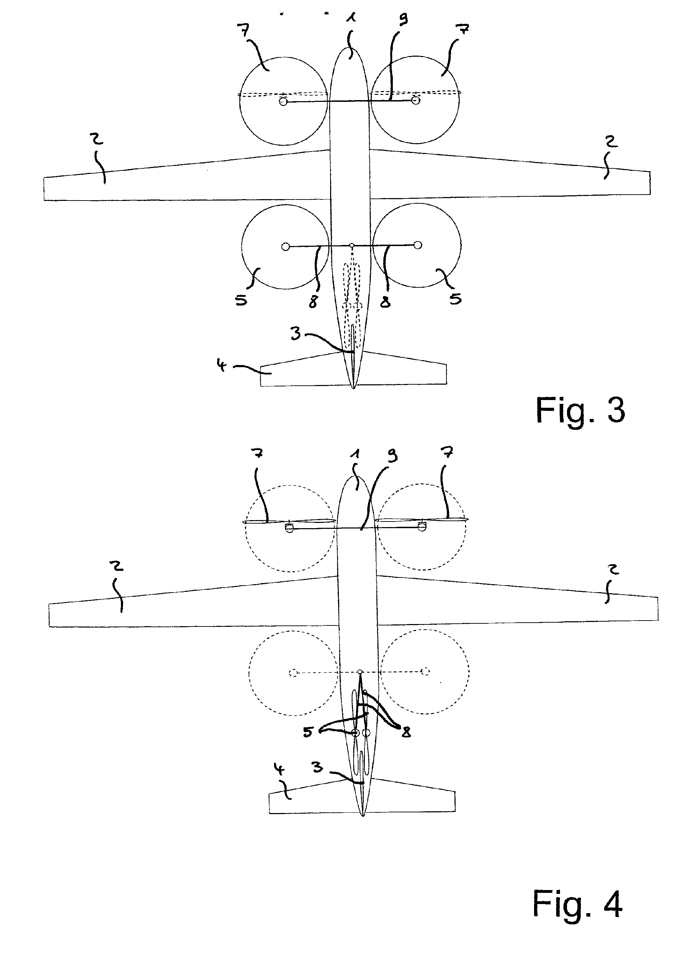

In den Fig. 3 und 4 ist eine Ausführungsform eines erfindungsgemäßen Fluggeräts mit insgesamt vier Antriebsrotoren dargestellt. Davon sind zwei, die hinteren, als Schwebeflug-Antriebsrotoren 5 und die zwei vorderen als Kombinations-Antriebsrotoren 7 ausgebildet. Jeder der Schwebeflug-Antriebsrotoren 5 ist an einem eigenen Schwenkarm 8 befestigt. Die beiden Kombinations-Antriebsrotoren 7 sind an einem gemeinsamen Dreharm 9 befestigt.

Im Schwebeflug (vgl. Fig. 3) sind sowohl die Schwebeflug-Antriebsrotoren 5 als auch die Kombinations-Antriebsrotoren 7 im Betrieb. Alle vier Antriebsrotoren sind dabei (in achsensymmetrischer Anordnung) seitlich des Rumpfs 1 positioniert und weisen eine vertikale Schubrichtung auf.

Im Reiseflug (vgl. Fig. 4) sind nur die zwei Kombinations-Antriebsrotoren 7 im Betrieb, die hierzu durch eine Drehung des gemeinsamen Dreharms 9 um ca. 90° in die horizontale Schubrichtung verschwenkt wurden. Die Schwebeflug-Antriebsrotoren 5 sind durch ein Verschwenken der dazugehörigen Schwenkarme 8 nach hinten in den Rumpf 1 des Fluggeräts eingezogen.

Auch hier erfolgt die Transition zwischen Schwebeflug und Reiseflug kontinuierlich, indem der Dreharm 9 mit relativ konstanter Drehgeschwindigkeit zwischen vertikaler und horizontaler Schubrichtung der Kombinations-Antriebsrotoren 7 gedreht wird.

Ein Vorteil der Ausführungsform der Fig. 3 und 4 gegenüber derjenigen der Fig. 1 und 2 ist die geringe technische Komplexität.

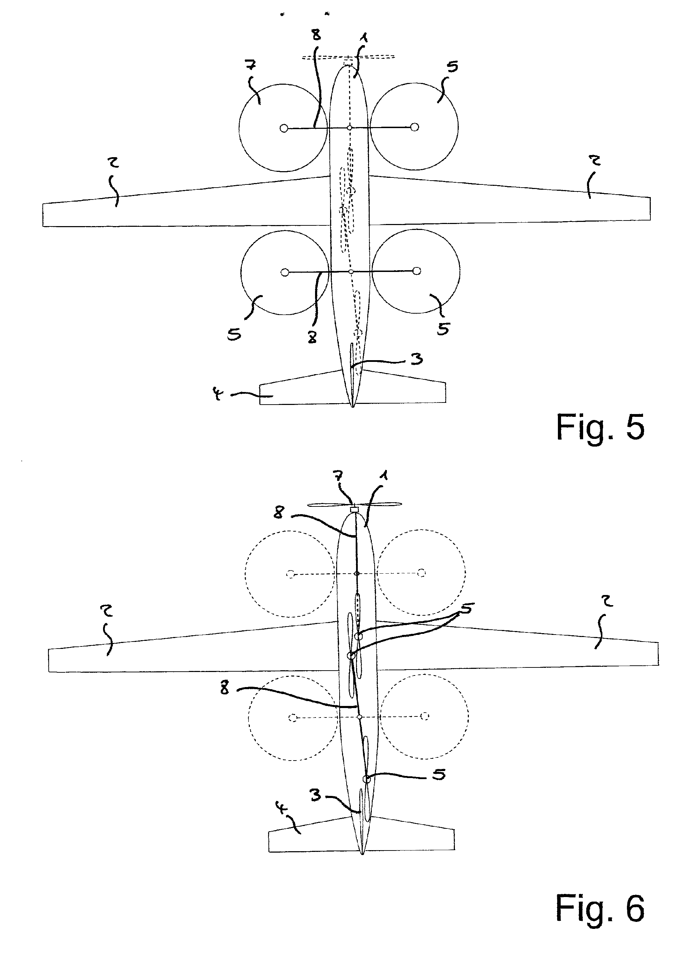

In den Fig. 5 und 6 ist eine Ausführungsform eines erfindungsgemäßen Fluggeräts mit insgesamt vier Antriebsrotoren dargestellt. Davon sind drei als Schwebeflug-Antriebsrotoren 5 und einer als Kombinations-Antriebsrotor 7 ausgebildet. Die beiden hinteren Schwebeflug-Antriebsrotoren 5 sind an einem gemeinsamen (hinteren) Schwenkarm 8 befestigt. Ebenso sind der Kombinations-Antriebsrotor 7 und der dritte Schwebeflug-Antriebsrotor 5 an einem gemeinsamen (vorderen) Schwenkarm 8 befestigt. Die beiden gemeinsamen Schwenkarme 8 sind um eine Achse drehbar, die mittig zwischen den beiden jeweiligen Antriebsrotoren und zudem parallel oder koaxial zur Hochachse des Fluggeräts liegt.

Im Schwebeflug (vgl. Fig. 5) sind sowohl die Schwebeflug-Antriebsrotoren 5 als auch der Kombinations-Antriebsrotor 7 im Betrieb. Alle vier Antriebsrotoren sind dabei (in achsensymmetrischer Anordnung) seitlich des Rumpfs 1 positioniert und weisen eine vertikale Schubrichtung auf.

Für den Reiseflug werden die beiden gemeinsamen Schwenkarme 8 um ca. 90° verschwenkt, wodurch die drei Schwebeflug-Antriebsrotoren 5 in den Rumpf eingezogen werden. Der Kombinations-Antriebsrotor 7 gelangt dabei in eine aerodynamisch vorteilhafte Position vor den Bug des Fluggeräts, wo dieser - nach einem zusätzlichen Verschwenken um ca. 90° um eine Achse, die senkrecht zur Längsachse des Schwenkarms 8 liegt, im Betrieb eine horizontale Schubwirkung aufweist. Dabei kann die Rotationsachse des Propellers des Kombinations-Antriebsrotor 7, der als Zugpropeller wirkt, koaxial zu der Längsachse des Fluggeräts sein.

Während des Verschwenkens der Schwenkarme sollten sich alle Antriebsrotoren im Stillstand befinden. Dadurch kann das Verschwenken in relativ kurzer Zeit (z.B. ca. 1 Sekunde) erfolgen. Die Transition zwischen Schwebeflug und Reiseflug erfolgt nicht kontinuierlich und mit einer kurzen antriebslosen Phase.

Ein Vorteil der Ausführungsform der Fig. 5 und 6 ist, dass sich im Reiseflug nur der eine Kombinations-Antriebsrotor 7 in der Luftströmung befindet und dass deshalb der Luftwiderstand im Reiseflug relativ gering ist.

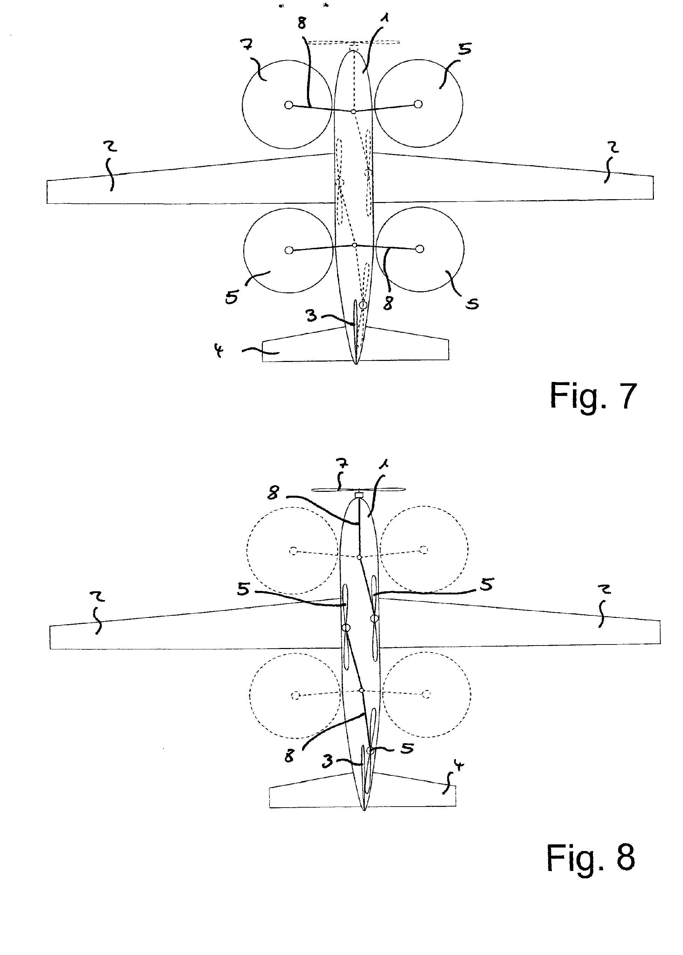

Die Ausführungsform eines erfindungsgemäßen Fluggeräts gemäß den Fig. 7 und 8 gleicht weitgehend derjenigen der Fig. 5 und 6. Ein Unterschied ist, dass die beiden Schwenkarme 8 individuell abgeknickt sind (um ca. 5° bis 20°). Auch hier ragen im Reiseflug keine aktuell nicht benötigten Antriebselemente in die Luftströmung.

Ein besonderer Vorteil dieser Ausführungsform ist, dass es die beiden abgeknickten Schwenkarme 8 ermöglichen, die im Reiseflug eingefahrenen Schwebeflug-Antriebsrotoren 5 dicht an der Außenhaut des Rumpfs 1 zu positionieren, so dass der Mittelbereich des Rumpfs 1 für andere Ausrüstungen frei bleibt.

Auch bei dieser Ausführungsform sollten sich alle Antriebsrotoren während des Verschwenkens der Schwenkarme 8 im Stillstand befinden, d.h. die Transition zwischen Schwebeflug und Reiseflug erfolgt nicht kontinuierlich, mit einer kurzen antriebslosen Phase.

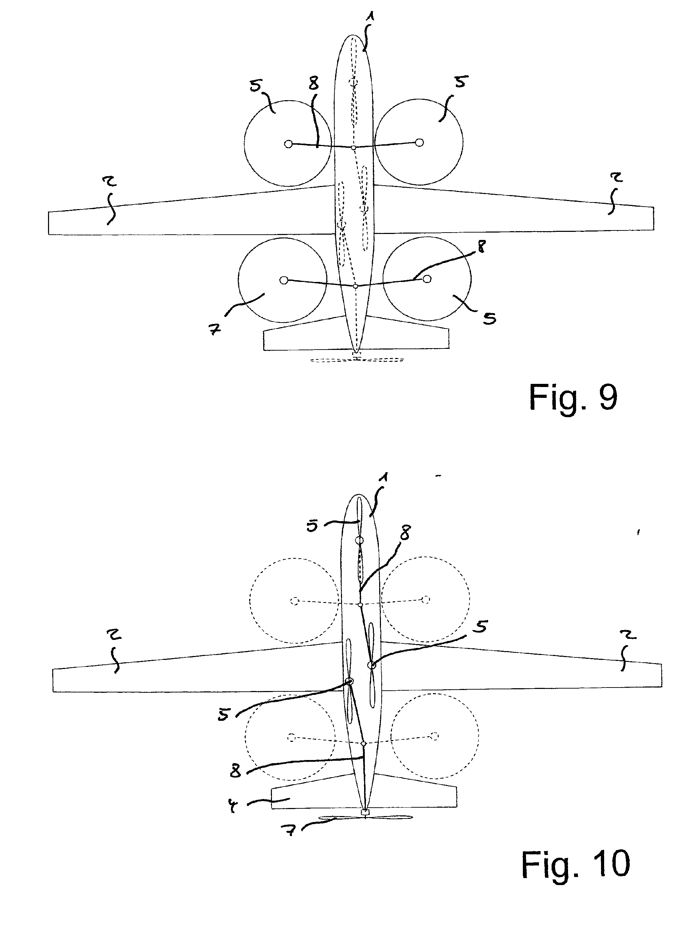

Die Ausführungsform eines erfindungsgemäßen Fluggeräts gemäß den Fig. 9 und 10 gleicht weitgehend derjenigen der Fig. 7 und 8. Ein Unterschied ist, dass der einzige im Reiseflug aktive Antriebsrotor, der Kombinationsantriebsrotor 7, nicht an den Bug sondern an das Heck des Fluggerätes geschwenkt wurde. Dieser wirkt infolge dessen als Druckpropeller.

Vorteile dieser Konfiguration sind, dass der Bug frei bleibt für die Unterbringung von in Flugrichtung blickenden Beobachtungskameras, deren Gesichtsfelder somit nicht durch durchlaufende Propellerflügel gestört werden, und dass der heckseitige Druckpropeller faltbar (d.h. als sogenannter Klapppropeller) ausgeführt sein kann, so dass ein antriebsfreier Segelflug mit minimalem aerodynamischem Widerstand, d.h. maximaler Gleitzahl, möglich ist.

Wie bei der Ausführungsform der Fig. 7 und 8 erfolgt auch hier die Transition zwischen Schwebeflug und Reiseflug nicht kontinuierlich, mit einer kurzen antriebslosen Phase.

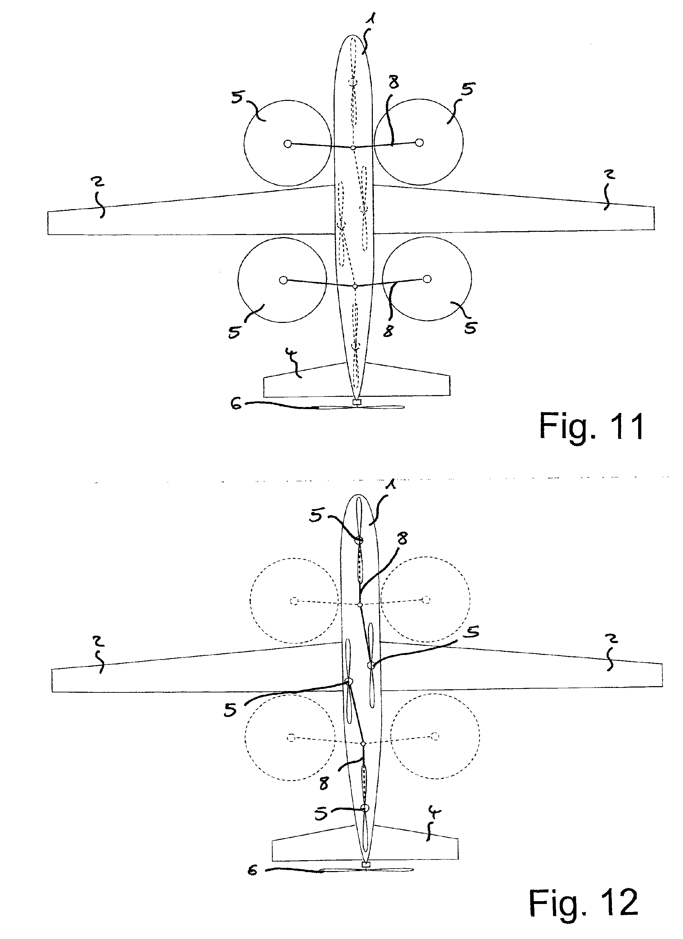

Die Ausführungsform eines erfindungsgemäßen Fluggeräts gemäß den Fig. 11 und 12 gleicht weitgehend derjenigen der Fig. 9 und 10. Ein Unterschied ist, dass alle vier im Schwebeflug aktiven (Schwebeflug-)Antriebsrotoren 5 mit ihren Schwenkarmen 8 einziehbar ausgeführt sind. Ein Kombinations-Antriebsrotor ist nicht vorgesehen. Die für den Reiseflug erforderliche horizontale Schubwirkung wird von einem Reiseflug-Antriebrotor 6 erzeugt, der fest am Heck des Fluggeräts angeordnet ist. Der Propeller dieses Reiseflug-Antriebrotor 6 kann auch als Klapppropeller ausgeführt sein, um im antriebslosen Gleitflug minimalen Luftwiderstand zu bieten.

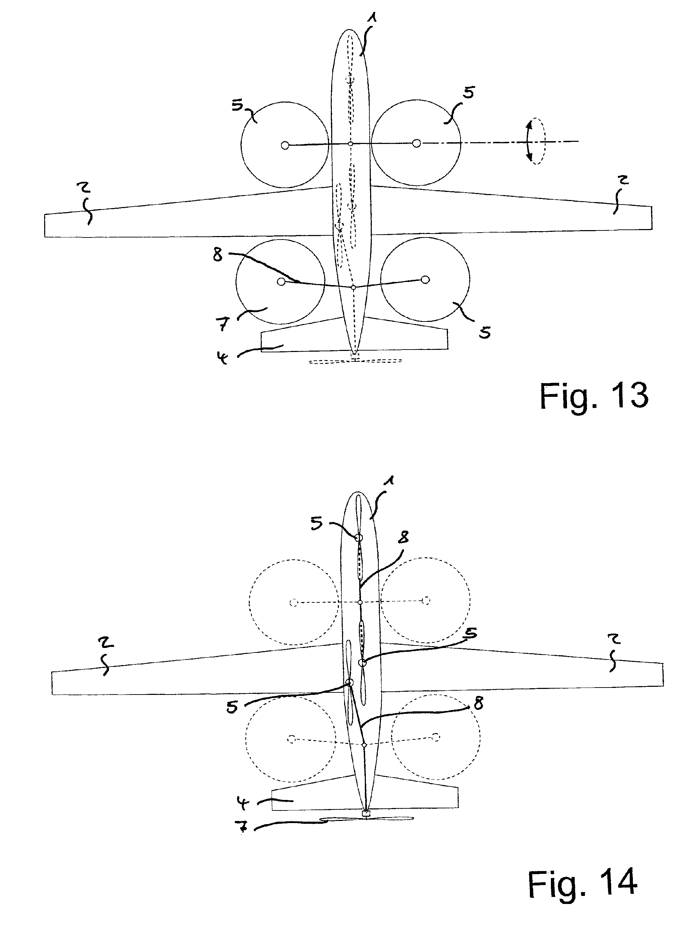

Die Ausführungsform eines erfindungsgemäßen Fluggeräts gemäß den Fig. 13 und 14 gleicht weitgehend derjenigen der Fig. 9 und 10. Ein Unterschied ist, dass der vordere Schwenkarm 8 nicht abgewinkelt ist und dieser zudem um seine eigene Längsachse verdrehbar ist. Anders als bei den Kombinations-Antriebsrotoren 7 gemäß den Fig. 1 bis 4 erfolgt dies jedoch nicht, um die daran befestigten Antriebsrotoren in horizontale Schubwirkung für den Reiseflug zu verschwenken. Vielmehr soll hier im Schwebeflug eine horizontale Schubkomponente zur Winddriftkompensation sowie zur Beschleunigung in den tragflächengetragenen Flug (zur Erleichterung der Transition in den Reiseflug) erzeugt werden. Hierzu reicht eine vergleichsweise geringe Drehbarkeit des gemeinsamen Schwenkarms 8 um seine eigene Achse von z.B. maximal ± 30°.

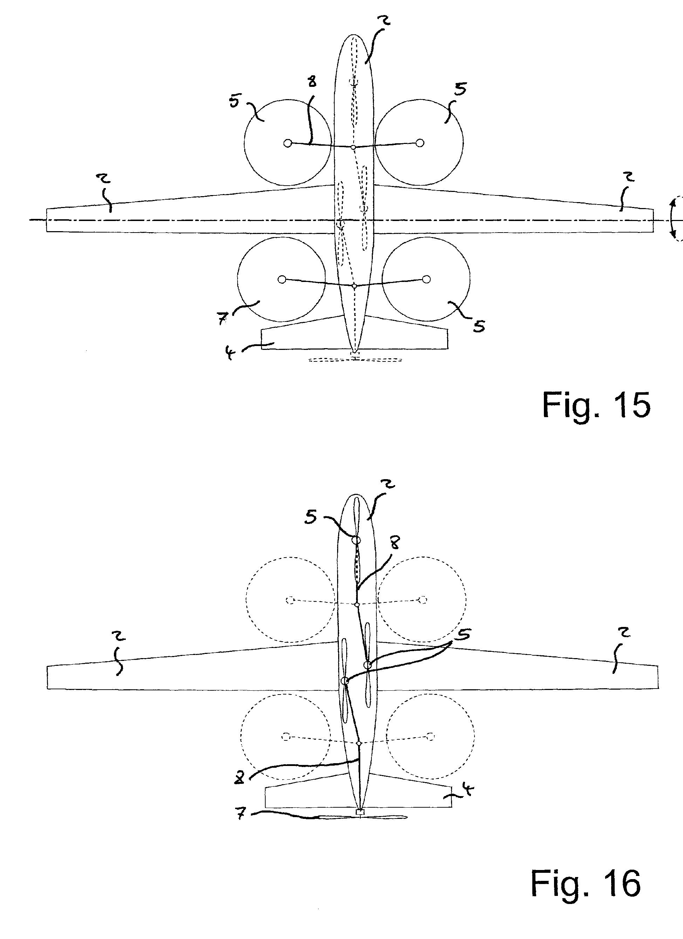

Die Ausführungsform eines erfindungsgemäßen Fluggeräts gemäß den Fig. 15 und 16 gleicht weitgehend derjenigen der Fig. 9 und 10. Ein Unterschied ist, dass hier die Tragflächen 2 gemeinsam um einen relativ kleinen Winkel von z.B. maximal ± 30° um eine in Längsrichtung der Tragflächen 2 weisende Achse drehbar sind, um bei Neigungen des schwebenden Fluggerätes senkrecht auf die Tragflächen 2 wirkende Anströmungen zu vermeiden.

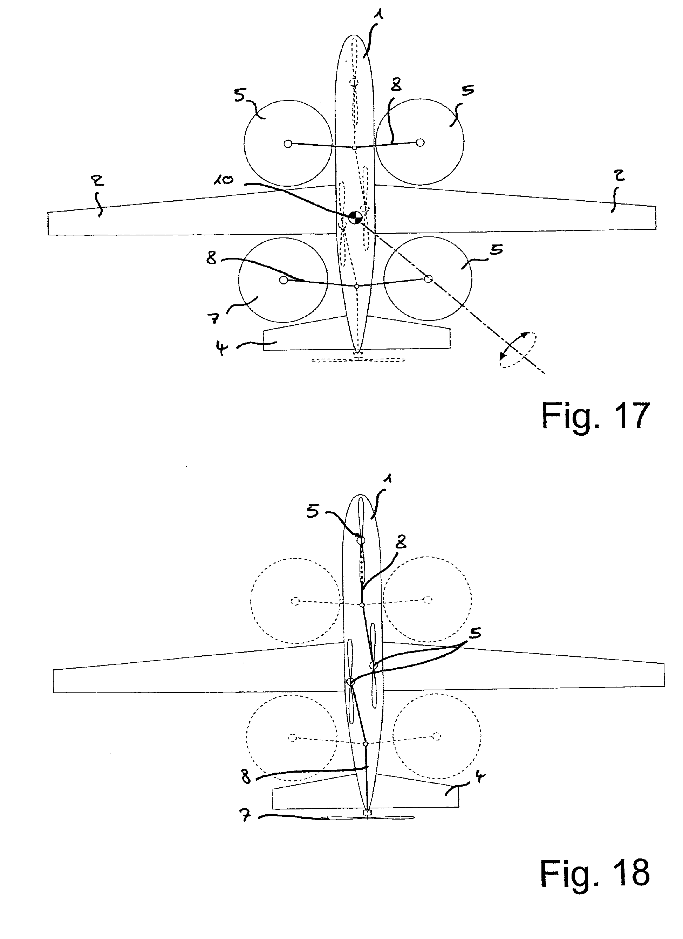

Die Ausführungsform eines erfindungsgemäßen Fluggeräts gemäß den Fig. 17 und 18 gleicht weitgehend derjenigen der Fig. 9 und 10. Ein Unterschied ist, dass der hintere Schwebeflug-Antriebsrotor 5 um einen kleinen Winkel von z.B. maximal ± 30° um eine radial zum Schwerpunkt 10 des Fluggeräts weisende und damit die Hochachse des Fluggeräts kreuzende Achse verschwenkbar ist, um ein variables Drehmoment um die Hochachse zu erzeugen und damit die Giersteuerung des Fluggerätes zu unterstützen.

## Patentansprüche

1. Fluggerät mit einem Rumpf (10), einer Tragfläche (2) und mindestens zwei Antriebsrotoren, **dadurch gekennzeichnet, dass**
- mindestens ein erster Antriebsrotor zumindest temporär eine horizontale Schubrichtung aufweist,
- mindestens ein zweiter Antriebsrotor an einem Schwenkarm (8) befestigt und mittels des Schwenkarms (8) von einer ersten Position in eine zweite Position verschwenkbar ist, wobei in der ersten Position ein Betrieb des Antriebsrotors mit zumindest vertikaler Schubrichtung erfolgt und in der zweiten Position der Antriebsrotor an dem Rumpf (1) und/oder der Tragfläche (2) anliegt oder in dem Rumpf (1) und/oder in der Tragfläche (2) aufgenommen ist, wobei in der zweiten Position kein Betrieb des Antriebsrotors erfolgt.

2. Fluggerät gemäß Anspruch 1, **dadurch gekennzeichnet, dass** die Antriebsrotoren Propeller aufweisen.

3. Fluggerät gemäß Anspruch 1 oder 2, **dadurch gekennzeichnet, dass** die Antriebsrotoren einen elektrischen Antriebsmotor aufweisen.

4. Fluggerät gemäß einem der vorhergehenden Ansprüche, **dadurch gekennzeichnet, dass** in der zweiten Position der Schwenkarm (8) und/oder der Propeller in Längsrichtung des Fluggeräts weisen.

5. Fluggerät gemäß einem der vorhergehenden Ansprüche, **dadurch gekennzeichnet, dass** die Antriebsrotoren nicht an den Tragflächen (2) befestigt sind.

6. Fluggerät gemäß einem der vorhergehenden Ansprüche, **dadurch gekennzeichnet, dass** die Anzahl der Antriebsrotoren geradzahlig ist und insbesondere vier oder sechs beträgt.

7. Fluggerät gemäß einem der vorhergehenden Ansprüche, **dadurch gekennzeichnet, dass** der erste Antriebsrotor zwischen der horizontalen und einer vertikalen Schubrichtung verschwenkbar ist.

8. Fluggerät gemäß Anspruch 7, **dadurch gekennzeichnet, dass** der erste Antriebsrotor an einem Dreharm (9) befestigt und mittels des Dreharms (9) von einer ersten Position in eine zweite Position verschwenkbar ist, wobei in der ersten Position ein Betrieb des Antriebsrotors mit vertikaler Schubrichtung erfolgt und in der zweiten Position ein Betrieb des Antriebsrotors mit horizontaler Schubrichtung erfolgt.

9. Fluggerät gemäß einem der vorhergehenden Ansprüche, **dadurch gekennzeichnet, dass** ein Paar von Antriebsrotoren über einen gemeinsamen Schwenkarm (8) verbunden ist, wobei der Schwenkarm (8) um eine durch den Rumpf (1) verlaufende, insbesondere zur Hochachse des Fluggeräts parallele oder koaxiale Achse drehbar ist.

10. Fluggerät gemäß Anspruch 8 und 9, **dadurch gekennzeichnet, dass** in der zweiten Position des ersten Antriebsrotors der andere Antriebsrotor des Paars an dem Rumpf (1) und/oder der Tragfläche (2) anliegt oder in dem Rumpf (1) und/oder der Tragfläche (2) aufgenommen ist.

11. Fluggerät gemäß einem der Ansprüche 9 oder 10, **dadurch gekennzeichnet, dass** mindestens zwei Paare mit jeweils zwei, über einen gemeinsamen Schwenkarm (8) verbundenen Antriebsrotoren in Längsrichtung hintereinander liegend vorgesehen sind

12. Fluggerät gemäß Anspruch 10 oder 11, **dadurch gekennzeichnet, dass** der gemeinsame Schwenkarm (8) derart ausgebildet ist, dass in der zweiten Position des ersten Antriebsrotors dessen Rotationsachse parallel und insbesondere koaxial zur Längsachse des Fluggeräts ist und der andere Antriebsrotor des Paars an dem Rumpf (1) und/oder der Tragfläche (2) anliegt.

13. Fluggerät gemäß Anspruch 2 oder einem der von Anspruch 2 abhängigen Ansprüche, **dadurch gekennzeichnet, dass** der Propeller des zweiten Antriebsrotors als Zweiblatt-Festpropeller ausgeführt ist.

14. Fluggerät gemäß Anspruch 2 oder einem der von Anspruch 2 abhängigen Ansprüche, **dadurch gekennzeichnet, dass** der Propeller des ersten Antriebsrotors als Zwei- oder Mehrblatt-Verstellpropeller ausgeführt ist.

15. Fluggerät gemäß Anspruch 9 oder einem der von Anspruch 9 abhängigen Ansprüche, **dadurch gekennzeichnet, dass** das Antriebsrotorenpaar zusätzlich um die Längsachse des gemeinsamen Schwenkarms (8) verschwenkbar ist.

16. Fluggerät gemäß einem der vorhergehenden Ansprüche, **dadurch gekennzeichnet, dass** die Tragfläche (2) um eine quer zur Längsachse des Fluggerätes liegende Achse verschwenkbar ist.

17. Fluggerät gemäß einem der vorhergehenden Ansprüche, **dadurch gekennzeichnet, dass** der zweite Antriebsrotor in der ersten Position um eine im Wesentlichen horizontale, die Hochachse des Fluggeräts im Wesentlichen kreuzende Achse verschwenkbar ist.
